# EUROPEAN PATENT APPLICATION

(11) **EP 3 252 707 A1**
(43) Date of publication of application: **06.12.2017**
(21) Application number: 16743010.7
(22) Date of filing: 28.01.2016
(51) Int. Cl.: G06T 1/00, G06T 7/60, H04N 7/18

(54) **IMAGE PROCESSING APPARATUS, IMAGE PROCESSING SYSTEM, VEHICLE, IMAGING APPARATUS, AND IMAGE PROCESSING METHOD**

(30) Priority: 28.01.2015 JP 2015014817
(71) Applicant: Kyocera Corporation, Kyoto-shi, Kyoto 612-8501 (JP)
(72) Inventor: NAKATA, Takatoshi, Kyoto-shi Kyoto 612-8501 (JP); SHIMABUKURO, Tomo, Kyoto-shi Kyoto 612-8501 (JP)
(74) Representative: Schwabe - Sandmair - Marx
(86) International application number: PCT/JP2016/000452
(87) International publication number: WO 2016/121406

(57) **Abstract**

An image processing apparatus, an image processing system, a vehicle, an imaging apparatus and an image processing method for dynamically determining an image processing area in a captured image of vehicle's surrounding area are provided. The image processing apparatus 12, mounted on the vehicle 16, includes a processor 26 configured to determine an image processing area 32 on a captured image of a traveling path 17. The processor 26 is configured to perform processing to determine at least a part of an approximate line 30 corresponding to a distal end 31 of the traveling path 17 in the captured image based on at least one of the luminance information and the color information of the captured image and processing to determine the image processing area 32 based on a position previously determined relative to at least a part of the approximate line 30.

## Description

### CROSS-REFERENCE TO RELATED APPLICATION

This application claims priority to and the benefit of Japanese Patent Application No. 2015-014817 filed on January 28, 2015, the entire contents of which are incorporated herein by reference.

### TECHNICAL FIELD

The disclosure relates to an image processing apparatus, an image processing system, a vehicle, an imaging apparatus and an image processing method that use a captured image of vehicle's surrounding area.

### BACKGROUND

In the past, a plurality of car cameras have been mounted on a vehicle to capture images of a vehicle's surrounding area and generated images have been used to display an image by which the vehicle's surrounding area can be visually recognized. For example, PTL 1 discloses a method in which a position at which an image of a vehicle's surroundings is displayed on a video display means is moved based on the vehicle's inclination detected by a detection means, such as an inclinometer. In this manner, a method of displaying an image of the vehicle's surroundings with high accuracy is desired.

### CITATION LIST

### Patent Literature

PTL 1: JP09-052555 A

### SUMMARY

### (Technical Problem)

However, even if the vehicle itself is not inclined, an object included in a capture range varies depending on the vehicle's surrounding environment. For example, when capturing an object in the direction of travel of the vehicle, in the case of an uphill traveling path the traveling path will occupy a major portion of the capture range. Whereas, in the case of a downhill traveling path in the direction of travel of the vehicle, the sky above the traveling path will occupy a major portion of the capture range. Thus, it is not necessarily appropriate to use a fixed area in a captured image as an image processing area for performing the image processing, such as the extraction processing of a display range, for example.

It is an object of the disclosure to provide an image processing apparatus, an image processing system, a vehicle, an imaging apparatus and an image processing method for dynamically determining an image processing area on a captured image of a vehicle's surrounding area.

### (Solution to Problem)

An image processing apparatus according to one embodiment of the disclosure is an image processing apparatus mounted on a vehicle including a processor configured to determine an image processing area in a captured image of a traveling path, wherein the processor performs:
processing to determine at least a part of an approximate line corresponding to a distal end of the traveling path in the captured image based on at least one of luminance information and color information of the captured image; and
processing to determine the image processing area based on a position previously determined relative to at least a part of the approximate line.

Further, an image processing system according to one embodiment of the disclosure includes:
an imaging apparatus configured to capture a traveling path and generate a captured image; and
an image processing apparatus having a processor configured to perform processing to determine at least a part of an approximate line corresponding to a distal end of the traveling path in the captured image based on at least one of luminance information and color information of the captured image and processing to determine an image processing area in the captured image based on a position previously determined relative to at least a part of the approximate line.

Further, a vehicle according to one embodiment of the disclosure includes an image processing system having an imaging apparatus configured to capture a traveling path and generate a captured image, and an image processing apparatus including a processor configured to perform processing to determine at least a part of an approximate line corresponding to a distal end of the traveling path in the captured image based on at least one of luminance information and color information of the captured image and processing to determine an image processing area in the captured image based on a position previously determined relative to at least a part of the approximate line.

Further, an imaging apparatus according to one embodiment of the disclosure is an imaging apparatus mounted on a vehicle, including:
an imaging device configured to capture a traveling path and generate a captured image; and
a processor configured to determine an image processing area in the captured image; wherein
the processor performs processing to determine at least a part of an approximate line corresponding to a distal end of the traveling path in the captured image based on at least one of luminance information and color information of the captured image and processing to determine the image processing area based on a position previously determined relative to at least a part of the approximate line.

Further, an image processing method according to one embodiment of the disclosure includes the steps of:
determining at least a part of an approximate line corresponding to a distal end of a traveling path in a captured image based on at least one of luminance information and color information of the captured image of the traveling path; and
determining an image processing area in the captured image based on a position previously determined relative to at least a part of the approximate line.

### BRIEF DESCRIPTION OF THE DRAWINGS

In the accompanying drawings:
FIG. 1 is a block diagram illustrating a schematic configuration of an image processing system according to a first embodiment of the disclosure;
FIG. 2 is a schematic diagram illustrating a vehicle provided with the image processing system in FIG. 1;
FIGS. 3A through 3C each illustrate an example of a captured image generated by an imaging apparatus in FIG. 1;
FIGS. 4A through 4C each illustrate an image processing area in the captured image generated by the imaging apparatus in FIG. 1;
FIG. 5 is a flowchart illustrating an operation of the image processing system in FIG. 1;
FIGS. 6A and 6B each illustrate an example of reference information according to a variation of the first embodiment of the disclosure;
FIGS. 7A and 7B each illustrate an operation of the image processing apparatus according to the variation of the first embodiment of the disclosure;
FIGS. 8A and 8B each illustrate an example of a captured image generated by an imaging apparatus according to a second embodiment of the disclosure;
FIGS. 9A and 9B each illustrate an operation of an image processing apparatus according to the second embodiment of the disclosure; and
FIG. 10 is a flowchart illustrating an operation of an image processing system according to the second embodiment of the disclosure.

### DETAILED DESCRIPTION

Embodiments of the disclosure will be described below with reference to the drawings.

### (First Embodiment)

First, an image processing apparatus, an image processing system, a vehicle and an imaging apparatus according to a first embodiment of the disclosure will be described.

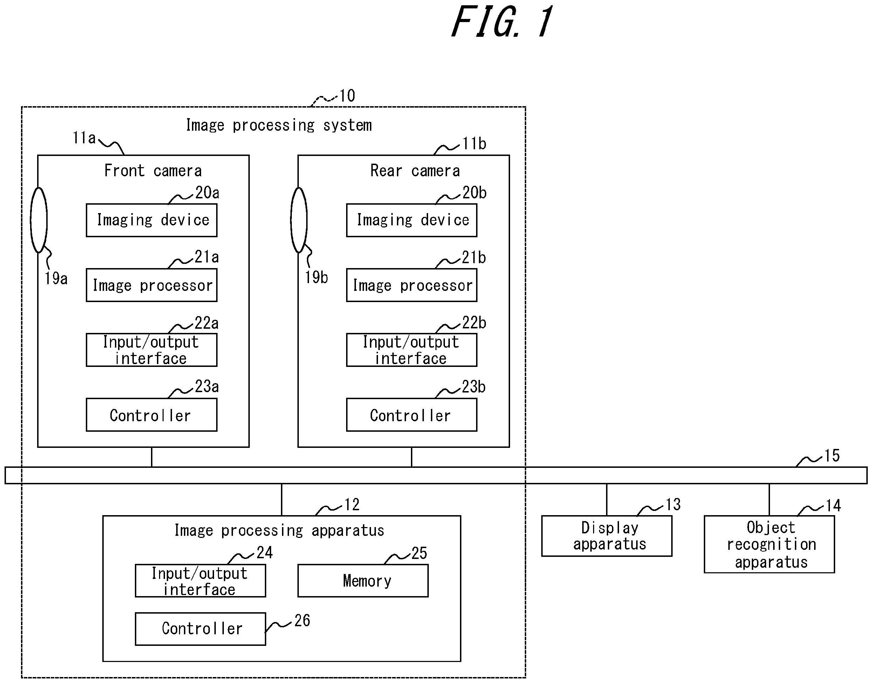

As illustrated in FIG. 1, an image processing system 10 includes a plurality of imaging apparatuses 11a and 11b and an image processing apparatus 12. The image processing system 10 may further include a display apparatus 13 and an object recognition apparatus 14. In this embodiment, the imaging apparatuses may be a front camera 11a and a rear camera 11b, for example. Each component of the image processing system 10 can transmit or receive information over a network 15, such as wireless, wired or CAN network.

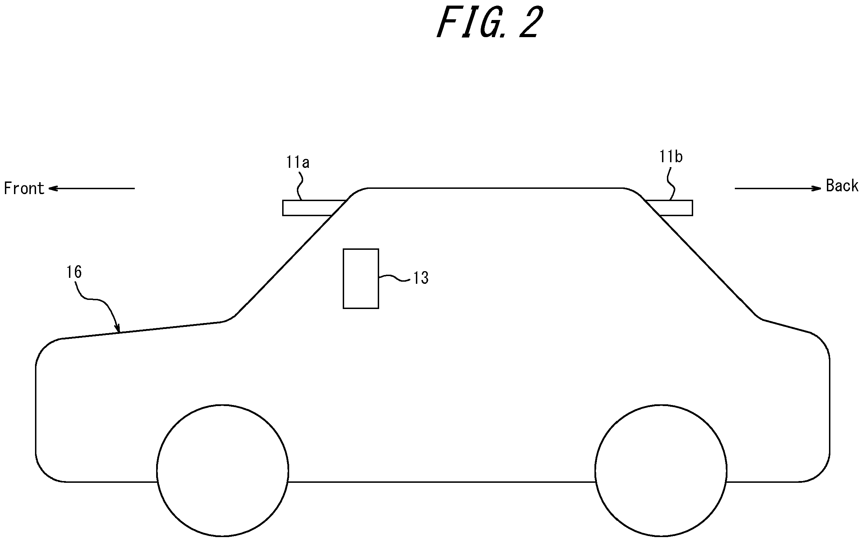

As illustrated in FIG. 2, the front camera 11a is disposed so that it can capture an image of the surrounding area in front of a vehicle 16. The rear camera 11b is disposed so that it can capture an image of the surrounding area behind the vehicle 16. The display apparatus 13 is disposed on a position which is visible from a driver seat.

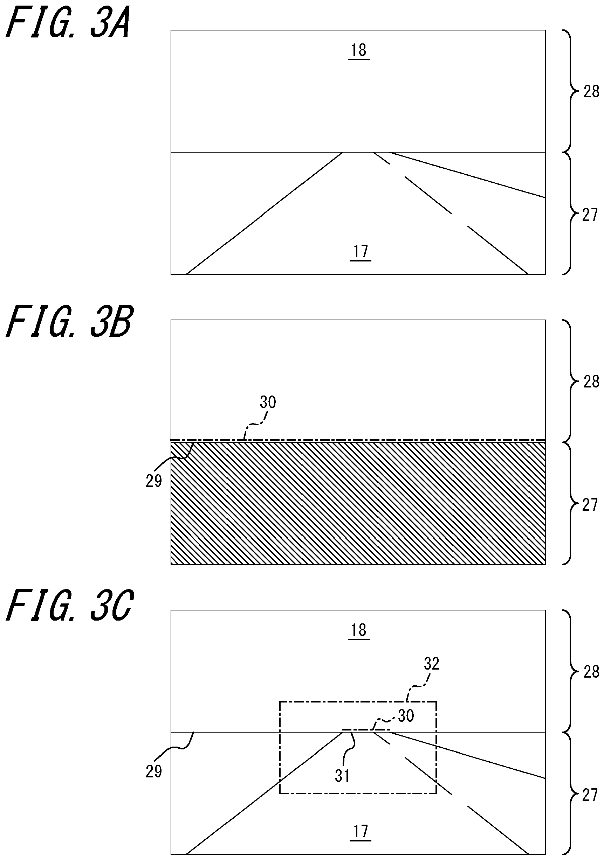

The front camera 11a and the rear camera 11b include a lens having a wide angle of view, such as a fish-eye lens. The lens allows for wide-angle photography of the surrounding area of the vehicle 16. For example, when the vehicle 16 is located on a traveling path extending away from the vehicle 16, the capture range of the front camera 11a and the capture range of the rear camera 11b each include a traveling path extending away from the vehicle 16 and the sky above the traveling path. Thus, images captured by the front camera 11a and the rear camera 11b include the traveling path 17 and the sky 18 as illustrated in FIG. 3A. In general, this wide-angle photography enables capture of objects in a wide range, and the objects on the periphery of the captured image appear to be curved. In the drawings, curved objects are not shown for simplicity of explanation.

Next, the configuration of the front camera 11a will be described. The front camera 11a (see FIG. 1) includes an optical system 19a, an imaging device 20a, an image processor 21a, an input/output interface 22a and a camera controller 23a.

The optical system 19a includes a diaphragm and a plurality of lenses and forms an image of the object. In this embodiment, the optical system 19a has a wide angle of view, and can form an image of the object in a capture range that includes a surrounding area in front of the vehicle 16.

The imaging device 20a may be a complementary metal oxide semiconductor (CMOS), for example, and captures an image of the object formed by the optical system 19a. Further, the imaging device 20a outputs a captured image to the image processor 21a as analog image signals.

The image processor 21a is a processor dedicated to image processing, such as a digital signal processor (DSP), and applies preprocessing, such as a correlated double sampling (CDS), gain adjustment and AD conversion, to image signals acquired from the imaging device 20a. The image processor 21a outputs the preprocessed image signals (captured image) to the image processing apparatus 12 over the network 15.

Further, the image processor 21a acquires the information related to an image processing area from the image processing apparatus 12, and uses the image processing area determined based on the information to apply normal image processing, such as an automatic exposure (AE), an automatic white balance (AWB), a color interpolation, a brightness correction, a color correction and a gamma correction to the captured image. The details of the image processing area and the information related to the image processing area will be described later. Preferably, the image processor 21a may extract an image processing area from the captured image subjected to the preprocessing and apply the above described normal image processing to the extracted image.

Then, the image processor 21a outputs a captured image subjected to the normal image processing to the display apparatus 13 and the object recognition apparatus 14 over the network 15.

The input/output interface 22a is an interface that inputs (acquires) and outputs the information over the network 15.

The camera controller 23a is a dedicated microprocessor or a general purpose central processing unit (CPU) that reads in a specific program to perform the specific processing. The camera controller 23a controls operation of each part of the front camera 11a. For example, the camera controller 23a controls operation of the imaging device 20a and the image processor 21a, and allows them to periodically output image signals at 30 fps, for example. Further, the camera controller 23a acquires the information related to an image processing area, to be described later, from the image processing apparatus 12.

As with the front camera 11a, the rear camera 11b includes an optical system 19b, an imaging device 20b, an image processor 21b, an input/output interface 22b and a camera controller 23b. The function and configuration of the optical system 19b, the imaging device 20b, the image processor 21b, the input/output interface 22b and the camera controller 23b are the same as those of the front camera 11a.

The image processing apparatus 12 includes an input/output interface 24, a memory 25 and a controller (processor) 26.

The input/output interface 24 is an interface that inputs (acquires) and outputs the information over the network 15.

The memory 25 stores various information and programs required for operating the image processing apparatus 12.

The controller 26 is a dedicated microprocessor or a general-purpose CPU that reads in a specific program to perform specific processing.

The controller 26 periodically acquires captured images from the front camera 11a and the rear camera 11b at 30 fps, for example. For simplicity of explanation, only an example of using the front camera 11a will be described below. An example of using the rear camera 11b is the same as that of using the front camera 11a, and thus is omitted for brevity.

The controller 26 determines at least a part of an approximate line corresponding to a distal end of a traveling path in a captured image based on at least one of the luminance information and the color information of the captured image that has been acquired. Operation for determining at least a part of the approximate line will be described in detail later.

The controller 26 determines an image processing area in the captured image based on a position previously determined relative to at least a part of the determined approximate line. Operation for determining the image processing area will be described in detail later.

Further, the controller 26 outputs the information related to the image processing area over the network 15. The information related to the image processing area includes the position, the size and the shape of the image processing area in the captured image, as described later.

The display apparatus 13 includes a liquid crystal display (LCD), for example, and can display real-time moving images. The display apparatus 13 acquires a captured image to which the normal image processing has been applied by the front camera 11a and the information related to the image processing area corresponding to the captured image over the network 15. Alternatively, the display apparatus 13 acquires a captured image whose image processing area has been extracted and to which the normal image processing has been applied by the front camera 11a over the network 15. Then the display apparatus 13 displays an image processing area of the captured image. Further, the display apparatus 13 may be a touch panel, for example. The display may serve also as an interface that receives a user operation.

The object recognition apparatus 14 acquires a captured image to which the normal image processing has been applied by the front camera 11a and the information related to an image processing area corresponding to the captured image over the network 15. Alternatively, the object recognition apparatus 14 acquires a captured image whose image processing area has been extracted and to which the normal image processing has been applied by the front camera 11a over the network 15. Then, the object recognition apparatus 14 performs the object recognition processing on the image processing area of the captured image. The object recognition is performed by using a general object recognition technique, such as pattern recognition. When a predetermined object, such as an obstruction, is detected the object recognition apparatus 14 notifies a driver of the presence of the object. A notification is made by any method, such as by causing the display apparatus 13 to display the presence of the object or by emitting a warning sound.

### (Operation for determining at least a part of an approximate line)

Next, operation of the controller 26 for determining at least a part of an approximate line will be described in detail. FIG. 3A illustrates an example of an image of a level traveling path 17 extending away from the vehicle 16 captured by the front camera 11a. The image has a first area 27 including the traveling path 17 and a second area 28 including the sky 18.

The controller 26 sets the threshold of the luminance signal or the color signal of the captured image to a predetermined value to perform the image thresholding. FIG. 3B illustrates an example of the captured image subjected to the image thresholding illustrated in FIG. 3A. In general, the luminance signal intensity based on the luminance information and the color signal intensity based on the color information of the second area 28 are larger than the luminance signal intensity and the color signal intensity of the first area 27 as the second area 28 includes the sky 18. The controller 26 sets a value greater than the luminance signal intensity and the color signal intensity in the first area 27 and smaller than the luminance signal intensity and the color signal intensity in the second area 28 as a threshold and performs the image thresholding. The captured image subjected to the image thresholding has a boundary 29 between the first area 27 and the second area 28 as illustrated in FIG. 3B. Thus, the controller 26 can determine the approximate line 30 corresponding to the boundary 29 between the first area 27 and the second area 28. Further, if a line or a curve corresponding to the boundary 29 is unclear in the captured image subjected to the image thresholding, the controller 26 may apply the least square curve fitting to the captured image subjected to the image thresholding to determine the approximate line 30.

As described above, when an image of the level traveling path 17 extending away from the vehicle 16 is captured, the distal end 31 of the traveling path 17 is located around the center of the captured image in the horizontal direction, as illustrated in FIG. 3C. The controller 26 may preferably determine the approximate line 30 corresponding to the boundary 29 between the first area 27 and the second area 28 only around the center of the captured image in the horizontal direction. In other words, the controller 26 determines at least a part of the approximate line 30 corresponding to the distal end 31 of the traveling path 17. Here, at least a part of the approximate line 30 may be a line element, which is a part of the approximate line 30, and may be two points on the approximate line 30.

Further, the controller 26 may determine at least a part of the approximate line 30 corresponding to the distal end 31 of the traveling path 17 based on the shape of the traveling path 17 in the captured image. For example, the controller 26 determines the shape of the traveling path 17 by applying image processing, such as contour detection processing or the pattern matching, to the captured image. Then, the controller 26 identifies the distal end 31 of the traveling path 17 based on the determined shape and determines at least a part of the approximate line 30 corresponding to the distal end 31. Hereinafter the at least a part of the approximate line 30 is also referred to as an approximate line 30 for simplicity of explanation.

### (Operation for determining an image processing area)

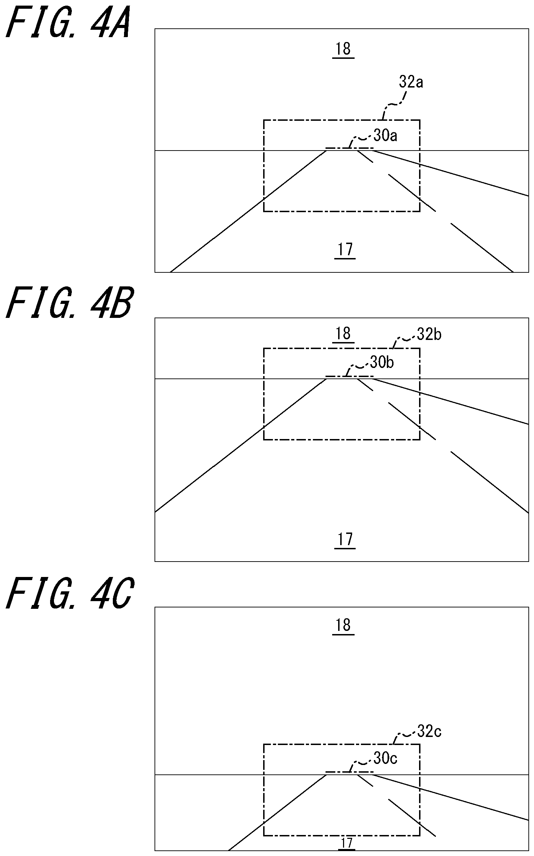

Next, operation of the controller 26 for determining the image processing area 32 will be described in detail. FIG. 4A is an example of an image of a level traveling path 17 extending away from the vehicle 16 captured by the front camera 11a. When the vehicle 16 is started, the controller 26 determines an image processing area 32a having a predetermined size and shape on a predetermined position of the captured image illustrated in FIG. 4A. Then the controller 26 stores the information indicating a position of the image processing area 32a relative to the approximate line 30a in the memory 25 as a default value.

Next, as illustrated in FIG. 4B, when the vehicle 16 travels to in front of an uphill traveling path 17, the approximate line 30b is located at a higher position in the captured image compared to the approximate line 30a in the captured image of the level traveling path 17 (see FIG. 4A). The controller 26 determines the image processing area 32b of the captured image based on the position previously determined relative to at least a part of the approximate line 30b, serving as a default value in this embodiment. For example, the controller 26 determines the image processing area 32b of the captured image illustrated in FIG. 4B so that the position of the image processing area 32b relative to the approximate line 30b will be substantially matched with the relative position stored as a default value. Thus, the relationship of the size and the position of the traveling path 17 relative to the image processing area 32a or 32b is maintained between when the level traveling path 17 is captured and when the uphill traveling path 17 is captured.

Next, as illustrated in FIG. 4C, when the vehicle 16 travels to in front of a downhill traveling path 17, the approximate line 30c is located at a lower position in the captured image compared to the approximate line 30a in the captured image of the level traveling path 17 (see FIG. 4A). The controller 26 determines the image processing area 32c of the captured image based on the position previously determined relative to at least a part of the approximate line 30c, serving as a default value in this embodiment. For example, the controller 26 determines the image processing area 32c of the captured image illustrated in FIG. 4C so that the position of the image processing area 32c relative to the approximate line 30c will be substantially matched with the relative position stored as a default value. Thus, the relationship of the size and the position of the traveling path 17 relative to the image processing area 32a or 32c is maintained between when the level traveling path 17 is captured and when the downhill traveling path 17 is captured.

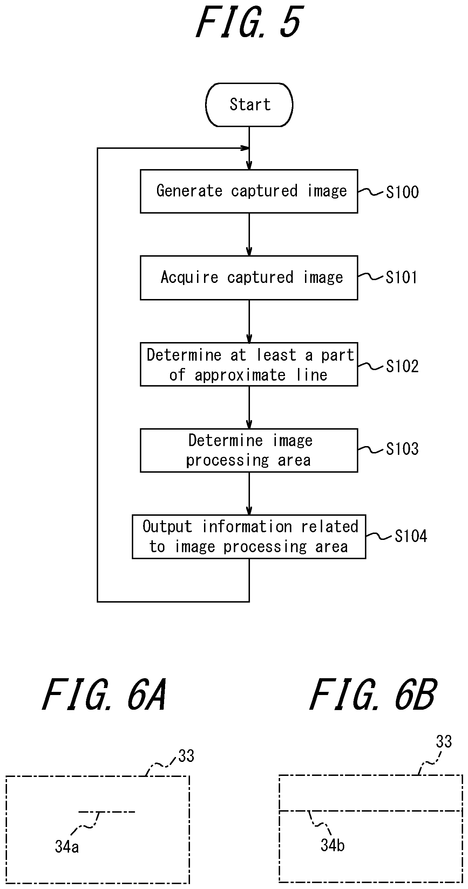

Next, operation of the image processing system 10 according to this embodiment will be described with reference to FIG. 5. This operation is started when a driver starts the vehicle 16 and is repeated until a predetermined terminating condition, such as engine shut-down, is met. Further, the operation described below is performed to each frame in which the front camera 11a generates a captured image. Operation of the rear camera 11b is the same as that of the front camera 11a, and thus its description is omitted for brevity.

First, the front camera 11a captures the traveling path 17 extending away from the vehicle 16 and generates a captured image (step S100).

Next, the controller 26 of the image processing apparatus 12 acquires the captured image generated in step S100 (step S101).

Subsequently, the controller 26 determines at least a part of the approximate line 30 corresponding to the distal end 31 of the traveling path 17 in the captured image based on at least one of the luminance information and the color information of the captured image acquired in step S101 (step S102).

Subsequently the controller 26 determines the image processing area 32 in the captured image acquired in step S101 based on a position previously determined relative to at least a part of the approximate line 30, serving as a default value in this embodiment (step S103).

Then, the controller 26 outputs the information related to the image processing area over the network 15 (step S104).

Thus, the image processing apparatus 12 of the image processing system 10 according to the first embodiment can dynamically determine the image processing area 32 in the captured image based on a position previously determined relative to at least a part of the approximate line 30. Thus, even if the vehicle 16 travels to in front of the sloped traveling path 17, the relationship of the size and the position of the traveling path 17 relative to the image processing area 32 is maintained. In other words, the position, the size and the shape of the image processing area 32 is determined so that the relationship of the size and the position of the traveling path 17 is maintained.

Further, in this embodiment, the image processing area 32 is determined as an area used for the predetermined image processing, such as extraction processing, object recognition processing, AE and AWB. The image processing area 32 determined as described above is suitable as an area for various image processing as described below.

For example, the display apparatus 13 displays the image processing area 32 in the captured image. As described above, even if the vehicle 16 travels to in front of the sloped traveling path 17, for example, the position and the size of the traveling path 17 included in the displayed image is maintained, and thus the visibility of the displayed image is maintained regardless of the slope of the traveling path 17.

Further, the object recognition apparatus 14 may perform the object recognition processing on the image processing area 32 of the captured image. In general, in the object recognition processing, an image background (e.g. the position and the size of the traveling path 17, the ratio between the first area 27 and the second area 28) may preferably be substantially the same over a captured image consisting of a plurality of frames in terms of processing load and recognition accuracy. As described above, for example, even if the vehicle 16 travels to in front of the sloped traveling path 17, the position and the size of the traveling path 17 included in the image processing area 32 in the captured image is maintained, and thus the image processing area 32 is suitable as an area for performing the object recognition processing.

Further, the front camera 11a performs image processing, such as AE and AWB, based on the luminance information and the color information of the image processing area 32 in the captured image. In general, if the traveling path 17 occupies a major part of the capture range, AE and AWB cause blown-out highlights on the sky 18 of the captured image. Conversely, if the sky 18 occupies a major part of the capture range, AE and AWB cause blocked up shadows on the traveling path 17 of the captured image. As described above, even if the vehicle 16 travels to in front of the sloped traveling path 17, the position and the size of the traveling path 17 included in the image processing area 32 of the captured image is maintained. Consequently, a captured image exhibits fewer blown-out highlights and blocked up shadows. Further, variations in brightness and white balance of the captured image before and after traveling of the vehicle 16 to in front of the sloped traveling path 17 are reduced.

Further, in this embodiment, the image processing apparatus 12 determines at least a part of the approximate line 30 by using image thresholding based on the luminance information and the color information of the captured image. As described above, the luminance signal intensity based on the luminance information and the color signal intensity based on the color information of the second area 28 are greater than the luminance signal intensity and the color signal intensity of the first area 27 since the second area 28 includes the sky 18. Thus, the approximate line 30 can be determined by using the image thresholding, and the processing load can be reduced compared to other processing, such as contour detection processing, for example.

### (Variation of the first embodiment)

Next, variation of the first embodiment according to the disclosure will be described. The configuration of the image processing system 10 according to the variation is the same as that of the first embodiment (see FIG. 1). In brief, the image processing system 10 according to the variation differs from the first embodiment in respect of the operation of the controller 26 and the information stored in the memory 25.

The memory 25 according to the variation stores the reference information indicating a reference relative position between the image processing area 32 and the traveling path 17 in the captured image. The reference relative position is previously determined depending on the content of the image processing performed by using the image processing area 32. For example, the reference information is the information indicating the shape and the size of an auxiliary area 33, the length of an auxiliary line 34a and the positional relationship between the auxiliary area 33 and the auxiliary line 34a. As described later, the auxiliary area 33 corresponds to the image processing area 32. Further, the auxiliary line 34a corresponds to the approximate line 30 that corresponds to the distal end 31 of the traveling path 17. The reference information may be image data (see FIG. 6A) including the auxiliary area 33 and the auxiliary line 34a. Alternatively, the reference information is the information indicating the shape and the size of the auxiliary area 33 and the positional relationship between the auxiliary area 33 and the auxiliary line 34b. As described later, the auxiliary line 34b corresponds to the approximate line 30 that corresponds to the boundary 29 between the first area 27 and the second area 28. The reference information may be the image data (see FIG. 6B) including the auxiliary area 33 and the auxiliary line 34b.

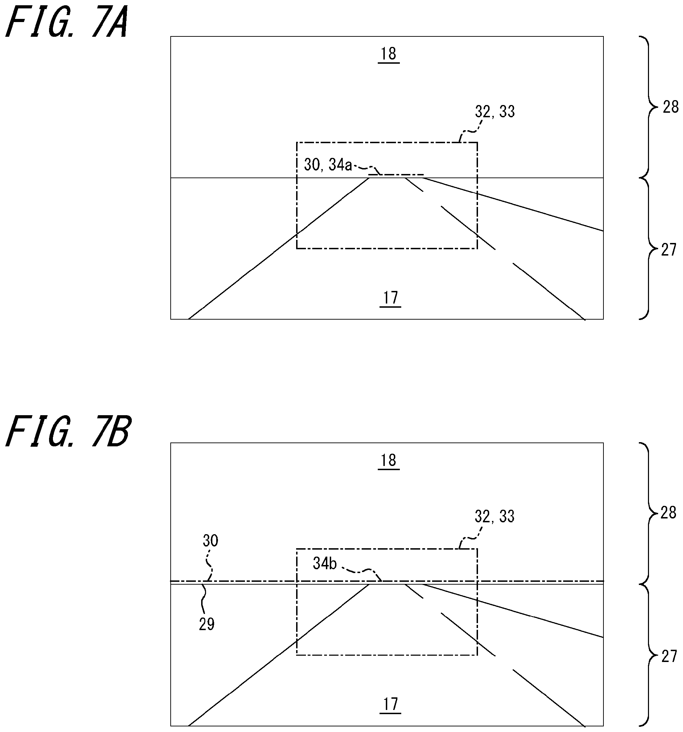

The controller 26 according to the variation determines the image processing area 32 in the acquired captured image based on the reference information stored in the memory 25. For example, as illustrated in FIG. 7A, when the reference information illustrated in FIG. 6A is used, the controller 26 determines the auxiliary area 33 in which the approximate line 30 is regarded as the auxiliary line 34a in the image processing area 32 of the captured image. Alternatively, as illustrated in FIG. 7B, when the reference information illustrated in FIG. 6B is used, the controller 26 determines the auxiliary area 33 in which the approximate line 30 is regarded as the auxiliary line 34b in the image processing area 32 of the captured image.

Thus, the image processing apparatus 12 of the image processing system 10 according to the variation determines the image processing area 32 in the captured image based on the reference information stored in the memory 25. Thus, for example, the reference relative position between the image processing area 32 and the traveling path 17 in the captured image is maintained whether or not the vehicle 16 is located in front of the sloped traveling path 17 when the vehicle 16 is started. Consequently, an appropriate image processing area 32 is determined in the captured image regardless of the surrounding circumstances when the vehicle 16 is started.

### (Second Embodiment)

Next, the second embodiment according to the disclosure will be described. The configuration of the image processing system 10 according to the second embodiment is the same as that of the first embodiment (see FIG. 1). In brief, the image processing apparatus 12 of the image processing system 10 according to the second embodiment is different from that according to the first embodiment in that the captured image is subject to rotation processing.

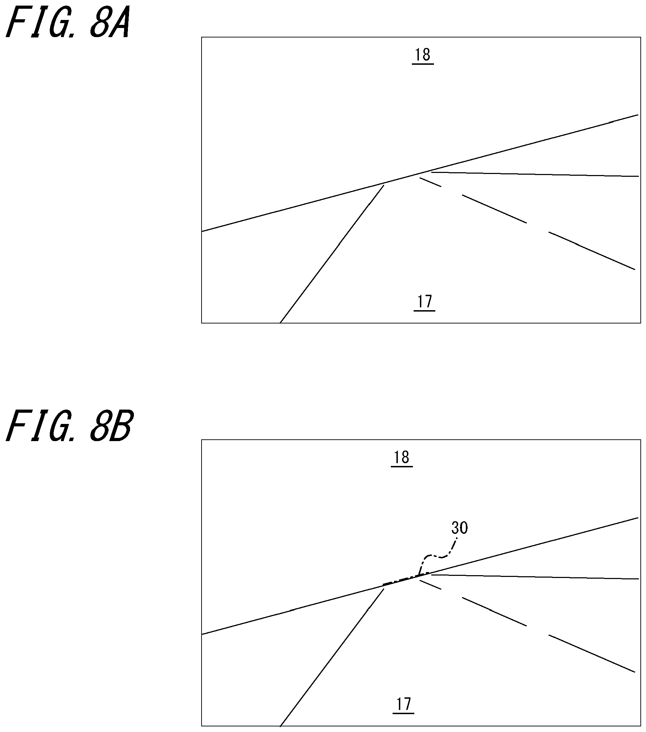

An example where the vehicle 16 is inclined to the right due to weight, such as a cargo, loaded unevenly on the right side of the vehicle 16 will be described. In this respect, FIG. 8A illustrates an example of a captured image by the front camera 11a. Objects such as the traveling path 17 and the sky 18 are inclined in the captured image. For the purposes of explanation, the objects in the drawing are shown with large inclination. FIG. 8B illustrates an example of the approximate line 30 determined by the controller 26 by using the captured image illustrated in FIG. 8A.

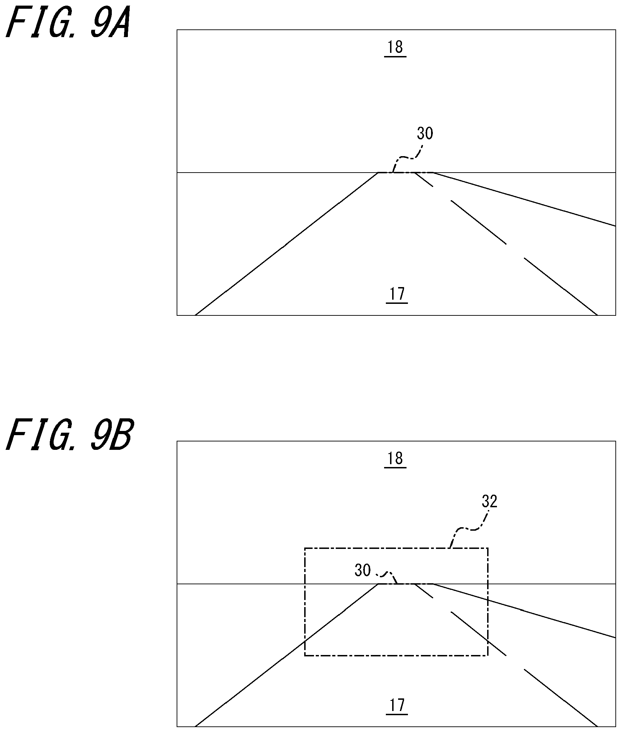

The controller 26 generates the correction information to be used for the rotation processing of the captured image based on the inclination of the approximate line 30 from an axis in a predetermined direction determined relative to the captured image. For example, the controller 26 generates a rotation angle used for the rotation processing of the captured image as the correction information so that the inclination of the approximate line 30 from the axis (x axis) in the horizontal direction determined relative to the captured image will be approximately zero; that is, the approximate line 30 will be parallel to the horizontal direction in respect of the captured image. The controller 26 uses the generated correction information and applies the rotation processing to the captured image. FIG. 9A illustrates an example of a captured image subjected to the rotation processing. As illustrated in FIG. 9A, the rotation processing applied to the captured image ensures that the approximate line 30 is parallel to the horizontal direction in respect of the captured image.

The controller 26 uses the captured image subjected to the rotation processing and determines the image processing area 32 in the captured image in the same manner as the first embodiment. FIG. 9B illustrates an example of the determined image processing area 32. As illustrated in FIG. 9B, the position of the image processing area 32 relative to the approximate line 30 is the same as that of the first embodiment.

As with the first embodiment, the controller 26 outputs the information related to the image processing area over the network 15. In this embodiment, the information related to the image processing area includes, for example, the correction information and the information indicating the position, the size and the shape of the image processing area 32.

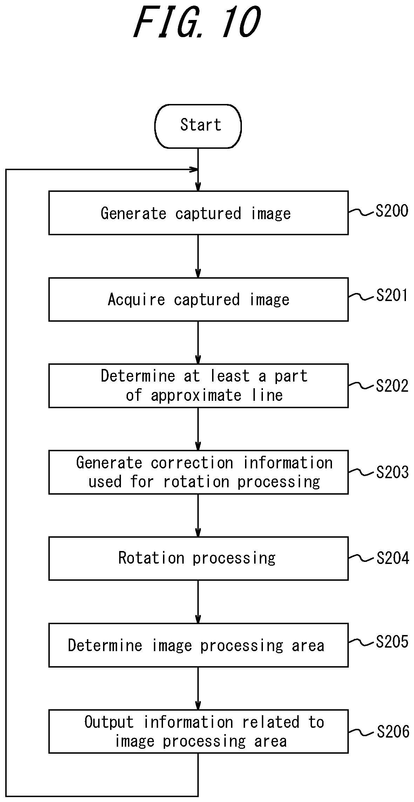

Operation of the image processing system 10 according to this embodiment will be described below with reference to FIG. 10. For example, this operation is started when a driver starts the vehicle 16, and is repeated until a predetermined termination condition, such as an engine shut-down, is met. Further, the following operation is performed with respect to each frame of the captured image generated by the front camera 11a. The operation performed for the rear camera 11b is the same as that for the front camera 11a, and thus its description is omitted.

In steps S200 through S202, the same processing as that performed in steps S100 through S102 according to the first embodiment (see FIG. 5) is performed.

Next, the controller 26 of the image processing apparatus 12 generates, based on the inclination of the approximate line 30 determined in S202 (see FIG. 10), the correction information to be used for rotation processing of the captured image (step S203).

Subsequently, the controller 26 applies the rotation processing to the captured image by using the correction information generated in step S203 (step S204).

Subsequently, the controller 26 determines the image processing area 32 in the captured image subjected to the rotation processing in step S204 based on the position previously determined relative to at least a part of the approximate line 30 determined in step S202, which serves as a default value in this embodiment (step S205).

Then, the controller 26 outputs the information related to the image processing area 32 over the network 15 (step S206).

Thus, the image processing apparatus 12 of the image processing system 10 according to the second embodiment generates, based on the inclination of the approximate line 30, the correction information for use in the rotation processing of the captured image. The correction information allows for correction of the inclination of the object in the captured image. Thus, even if the vehicle 16 is inclined either to left or right side, for example, an appropriate image processing area 32 can be determined in the captured image.

According to the image processing apparatus, the image processing system, the vehicle, the imaging apparatus and the image processing method of the above described embodiments of the disclosure, an image processing area can dynamically be determined in respect of a captured image of the vehicle's surrounding area.

Although the disclosure has been described with reference to the accompanying drawings and embodiments, it is to be noted that various changes and modifications will be apparent to those skilled in the art based on the disclosure. Therefore, such changes and modifications are to be understood as included within the scope of the disclosure. For example, the functions and the like included in the members, steps, and the like may be reordered in any logically consistent way. Furthermore, members, steps, and the like may be combined into one or divided.

For example, the image processing apparatus 12 may have functions and components of the display apparatus 13 and the object recognition apparatus 14. Further, the imaging apparatuses 11a and 11b may have functions and components of the image processing apparatus 12.

Further, the controller 26 of the image processing apparatus 12 may apply the extraction processing of the image processing area 32 to the captured image or the captured image subjected to the rotation processing, and output the extracted image to the front camera 11a or the rear camera 11b as the information related to the image processing area. In this case, the front camera 11a or the rear camera 11b applies the normal image processing, such as AE and AWB, to the captured image acquired from the image processing apparatus 12.

Further, a part of the components of the image processing system 10 according to the above described embodiments may be provided outside the vehicle 16. For example, the image processing apparatus 12 and the like may be provided as a communication device, such as a mobile phone and an external server, and connected to the other components of the image processing system 10 wired or wirelessly.

### REFERENCE SIGNS LIST

- 10: Image processing system
- 11a: Front camera
- 11b: Rear camera
- 12: Image processing apparatus
- 13: Display apparatus
- 14: Object recognition apparatus
- 15: Network
- 16: Vehicle
- 17: Traveling path
- 18: Sky
- 19a, 19b: Optical system
- 20a, 20b: Imaging device
- 21a, 21b: Image processor
- 22a, 22b: Input/output interface
- 23a, 23b: Camera controller
- 24: Input/output interface
- 25: Memory
- 26: Controller
- 27: First area
- 28: Second area
- 29: Boundary
- 30, 30a, 30b, 30c: Approximate line
- 31: Distal end
- 32, 32a, 32b, 32c: Image processing area
- 33: Auxiliary area
- 34a, 34b: Auxiliary line

## Claims

1. An image processing apparatus mounted on a vehicle comprising a processor configured to determine an image processing area in a captured image of a traveling path, wherein
the processor is configured to perform processing to determine at least a part of an approximate line corresponding to a distal end of the traveling path in the captured image based on at least one of luminance information and color information of the captured image, and processing to determine the image processing area based on a position determined relative to at least a part of the approximate line.

2. The image processing apparatus according to claim 1, wherein the image processing area is determined as an area used for a predetermined image processing.

3. The image processing apparatus according to claim 1 or 2, wherein the processor is configured to determine at least a part of the approximate line by using image thresholding based on the luminance information and the color information of the captured image.

4. The image processing apparatus according to any one of claims 1 to 3, further comprising a memory configured to store reference information that indicates a reference relative position between the image processing area and the traveling path in the captured image, wherein
the processor is configured to determine the image processing area in the captured image based on the reference information.

5. The image processing apparatus according to any one of claims 1 to 4, wherein the processor is further configured to perform processing to generate correction information used for rotation processing of the captured image based on an inclination of the approximate line.

6. An image processing system, comprising:
an imaging apparatus configured to capture a traveling path and generate a captured image; and
an image processing apparatus having a processor configured to perform processing to determine at least a part of an approximate line corresponding to a distal end of the traveling path in the captured image based on at least one of luminance information and color information of the captured image and processing to determining an image processing area in the captured image based on a position previously determined relative to at least a part of the approximate line.

7. A vehicle comprising an image processing system, the image processing system including an imaging apparatus configured to capture a traveling path and generate a captured image and an image processing apparatus having a processor configured to perform processing to determine at least a part of an approximate line corresponding to a distal end of the traveling path in the captured image based on at least one of luminance information and color information of the captured image and processing to determine an image processing area in the captured image based on a position previously determined relative to at least a part of the approximate line.

8. An imaging apparatus mounted on a vehicle: comprising
an imaging device configured to capture a traveling path and generate a captured image; and
a processor configured to determine an image processing area in the captured image, wherein
the processor is configured to perform processing to determine at least a part of an approximate line corresponding to a distal end of the traveling path in the captured image based on at least one of luminance information and color information of the captured image, and processing to determine the image processing area based on a position previously determined relative to at least a part of the approximate line.

9. An image processing method, comprising the steps of:
determining at least a part of an approximate line corresponding to a distal end of a traveling path in a captured image based on at least one of luminance information and color information of the captured image of the traveling path; and
determining an image processing area in the captured image based on a position previously determined relative to at least a part of the approximate line.
